(19) Europäisches Patentamt / European Patent Office / Office européen des brevets

(11) **EP 4 682 592 A1**

(12) **EUROPEAN PATENT APPLICATION**
published in accordance with Art. 153(4) EPC

(43) Date of publication:
**21.01.2026 Bulletin 2026/04**

(21) Application number: **23954032.1**

(22) Date of filing: **11.12.2023**

(51) International Patent Classification (IPC):
*G01V 1/36* (2006.01)

(52) Cooperative Patent Classification (CPC):
**G01V 1/36; Y02A 90/30**

(86) International application number:
**PCT/CN2023/137944**

(87) International publication number:
**WO 2025/065899 (03.04.2025 Gazette 2025/14)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **26.09.2023 CN 202311252533**

(71) Applicants:
• **China National Petroleum Corporation**
  **Beijing 100007 (CN)**
• **BGP Inc., China National Petroleum Corporation**
  **Hebei 072751 (CN)**
• **CNPC Exploration Software Co., Ltd**
  **Beijing 100080 (CN)**

(72) Inventors:
• **JING, Hongliang**
  **Baoding, Hebei 072751 (CN)**
• **SUN, Pengyuan**
  **Baoding, Hebei 072751 (CN)**
• **MA, Guangkai**
  **Baoding, Hebei 072751 (CN)**
• **ZHANG, Jianlei**
  **Baoding, Hebei 072751 (CN)**
• **LI, Yifan**
  **Baoding, Hebei 072751 (CN)**
• **ZHANG, Hongying**
  **Baoding, Hebei 072751 (CN)**

(74) Representative: **Ström & Gulliksson AB**
**P.O. Box 4188**
**203 13 Malmö (SE)**

(54) **DATA-DRIVEN DIRECTION SIGNAL DECONVOLUTION METHOD AND APPARATUS, AND READABLE STORAGE MEDIUM**

(57) The present invention belongs to the technical field of seismic data processing. Provided are a data-driven direction signal deconvolution method and apparatus, and a readable storage medium. The method comprises: acquiring a pre-stack seismic trace gather and a preset desired wavelet; performing forward Fourier transform, three-dimensional $\tau$ - $p$ transform, and inverse Fourier transform on the pre-stack seismic gather, so as to obtain first seismic data; performing time difference correction on the first seismic data, so as to obtain second seismic data; projecting each of the first seismic data and the second seismic data onto a preset bin grid, and forming first directional seismic data and second directional seismic data; obtaining a direction matching operator on the basis of the first directional seismic data and the preset desired wavelet; and using the direction matching operator to correct the second directional seismic data, and performing inverse three-dimensional $\tau$ - $p$ transform on corrected data, so as to obtain final seismic trace gather data. The present invention has the advantages of achieving high calculation precision and efficiency, greatly reducing the occupancy rate of a memory and the calculation cost, and increasing the signal-to-noise ratio of seismic data.

| | |
|---|---|
| acquiring pre-stack seismic trace gather data and a preset desired wavelet when seismic data is collected | Step one |
| sequentially perform forward Fourier transform, three-dimensional $t$-$p$ transform, and inverse Fourier transform on the pre-stack seismic trace gather data, so as to obtain first seismic data | Step two |
| perform, in each plane, time difference correction on each seismic trace in the first seismic data, so as to obtain second seismic data | Step three |
| project an azimuth angle of each seismic trace in the second seismic data onto a preset bin grid, determine one seismic trace in each bin, and form first directional seismic data on the basis of the seismic traces of all the bins | Step four |
| project an azimuth angle of each seismic trace in the first seismic data onto the preset bin grid, determine one seismic trace in each bin, and form second directional seismic data on the basis of the seismic traces of all the bins | Step five |
| obtain a direction matching operator on the basis of the first directional seismic data and the preset desired wavelet | Step six |
| use the direction matching operator to correct the second directional seismic data, and perform inverse three-dimensional $t$-$p$ transform on corrected data, so as to obtain final seismic trace gather data | Step seven |

FIG. 1

**Description**

**Field of the Invention**

The present invention relates to the technical field of seismic data processing, and particularly to a data-driven direction signal deconvolution method, a data-driven direction signal deconvolution apparatus and a readable storage medium.

**Background of the Invention**

In the process of marine oil and gas exploration, due to the limitations of sea-surface excitation conditions, air guns are typically chosen as the excitation seismic sources to minimize damage to the marine environment and provide stable excitation energy. However, as the seabed depth of the exploration area and the depth of the underground target horizons increase, the seismic signals released by a single air gun often lack sufficient energy. As a result, the reflected signals from the underground received by the geophones are easily masked by the bubble response formed by instantaneous pulses, making it difficult to obtain seismic data of satisfactory quality. To enhance the energy of the excitation seismic source and increase the proportion of effective signal energy, an air-gun array combination is employed as the excitation seismic source in practical marine seismic acquisition.

An air-gun array combination involves arranging multiple single air guns in a specific spatial configuration (including both horizontal and vertical arrangements). The signals generated by each air gun are then synthesized into a primary excitation wavelet signal based on their spatial positions. Although this array combination can effectively enhance the excitation energy, the spatial combination center no longer meets the assumptions of point-source excitation. Consequently, the superimposed responses of signals emitted by individual air guns vary at different angles. As a result, the synthetic far-field wavelet varies with different stacking angles, exhibiting a pronounced directional dependence. In marine seismic data processing, to improve data quality, it is essential to extract seismic wavelets with high signal-to-noise ratios and stable morphologies. However, the directional effect undermines the horizontal consistency of the wavelet and must be eliminated. In the past, marine seismic exploration primarily relied on towed-streamer acquisition methods, which only captured narrow-azimuth seismic data. The directional effect caused by the superposition of far-field wavelets at different angles was relatively insignificant, and one-dimensional signal deconvolution could effectively address this problem. Additionally, in recent years, with the development of marine Ocean Bottom Nodes (OBN) acquisition technology, which provides comprehensive, high-density, and long-offset data, it has become increasingly favored for enhancing the quality of seismic imaging in complex hydrocarbon reservoirs. However, this advancement also poses more severe challenges for OBN data processing, with the directional effect of far-field wavelets becoming particularly prominent. To address this problem, three technical challenges must be overcome: (1) how to characterize the directionality of far-field wavelets; (2) how to extract far-field wavelets with directional properties; and (3) how to eliminate the directional effect of far-field wavelets. To tackle these three technical difficulties, there is an urgent need for a method and device capable of effectively eliminating the directional effect of far-field wavelets.

**Summary of the Invention**

The objective of the embodiments of the present invention is to provide a data-driven direction signal deconvolution method and apparatus and a readable storage medium, so as to address, at least, the following problems in the existing technologies: the directional effect of far-field wavelets is excessively prominent, making it impossible to characterize the directionality of far-field wavelets and extract far-field wavelets with directional information; and the inability to eliminate the directional effect of far-field wavelets.

In order to achieve the above objective, a first aspect of the present invention provides a data-driven direction signal deconvolution method, the method including:

acquiring pre-stack seismic trace gather data and a preset desired wavelet when seismic data is collected;

sequentially performing forward Fourier transform, three-dimensional $\tau$ - $p$ transform, and inverse Fourier transform on the pre-stack seismic trace gather data, so as to obtain first seismic data;

performing, in each plane, time difference correction on each seismic trace in the first seismic data, so as to obtain second seismic data;

projecting an azimuth angle of each seismic trace in the second seismic data onto a preset bin grid, determining one seismic trace in each bin, and forming first directional seismic data on the basis of the seismic traces of all the bins;

projecting an azimuth angle of each seismic trace in the first seismic data onto the preset bin grid, determining one seismic trace in each bin, and forming second directional seismic data on the basis of the seismic traces of all the bins;

obtaining a direction matching operator on the basis of the first directional seismic data and the preset desired wavelet;

and

using the direction matching operator to correct the second directional seismic data, and performing inverse three-dimensional $\tau$ - $p$ transform on corrected data, so as to obtain final seismic trace gather data.

Optionally, sequentially performing forward Fourier transform, three-dimensional $\tau$ - $p$ transform, and inverse Fourier transform on the pre-stack seismic trace gather data, so as to obtain the first seismic data, includes:

calculating an offset for each seismic trace on the basis of shot point coordinates and receiver point coordinates of the pre-stack seismic trace gather data;
performing forward Fourier transform along a time direction on the pre-stack seismic trace gather data to obtain first seismic sub-data;
obtaining conjugate operators of a horizontal transformation operator and a vertical transformation operator on the basis of the offset of each seismic trace;
performing forward three-dimensional $\tau$ - $p$ transform on the seismic sub-data on the basis of the conjugate operators to obtain second seismic sub-data; and
performing inverse Fourier transform along a time direction on the second seismic sub-data to obtain the first seismic data.

Optionally, an expression of the conjugate operator of the horizontal transformation operator is:

$$L_x^H = e^{i\omega(offsetx)_m P_k} ;$$

wherein, $L_x^H$ is a conjugate operator of the horizontal transformation operator; $\omega$ is an angular frequency of the seismic data; $offsetx$ is an offset in an $x$ direction; $m$ is a number of horizontal seismic traces; $p_k$ is a horizontal ray parameter; $k$ is a horizontal trace number in a $\tau$ - $p$ domain; i is an imaginary unit; and
an expression of the conjugate operator of the vertical transformation operator is:

$$L_y^H = e^{i\omega(offsety)_n P_j} ;$$

wherein, $L_y^H$ is a conjugate operator of the horizontal transformation operator; $\omega$ is an angular frequency of the seismic data; $offsety$ is an offset in a $y$ direction; $n$ is a number of horizontal seismic traces; $p_j$ is a horizontal ray parameter; $j$ is a vertical trace number in a $\tau$ - $p$ domain; i is an imaginary unit.

Optionally, performing, in each plane, time difference correction on each seismic trace in the first seismic data, so as to obtain the second seismic data includes:

performing time difference correction by using the following formula:

$$M_{cor}(p_x, p_y, t) = M(p_x, p_y, t) + \tau_0 \sqrt{1 - (p_x v + p_y v)^2} - \frac{h}{v} ;$$

wherein, $M_{cor}(p_x, p_y, t)$ is the second seismic data; $M(p_x, p_y, t)$ is the first seismic data; $\tau_0$ is an intercept time at a zero-offset position, $V$ is an interval velocity of a first medium; $p_x$ and $p_y$ are ray parameters for each seismic trace in the first seismic data; $h$ is a distance from a correction plane to a water surface.

Optionally, the azimuth angle includes a horizontal azimuth angle and a vertical emergence angle, and the method further includes:

calculating the horizontal azimuth angle and the vertical emergence angle using the following formulas:

$$\alpha = \arctan(\frac{p_x}{p_y}) ;$$

$$\beta = \arcsin(v\sqrt{p_x^2 + p_y^2})\;;$$

wherein, $\alpha$ is the horizontal azimuth angle; $\beta$ is the vertical emergence angle; $p_x$ and $p_y$ are ray parameters for each seismic trace; $V$ is an interval velocity of a first medium.

Optionally, obtaining the direction matching operator on the basis of the first directional seismic data and the preset desired wavelet includes:

performing wavelet matching on the first directional seismic data and the preset desired wavelet to obtain a matching operator; and
obtaining a direction matching operator using the least squares criterion on the basis of the matching operator.

Optionally, obtaining the direction matching operator on the basis of the first directional seismic data and the preset desired wavelet further includes:

obtaining a direction matching operator using the following formulas:

$$f(\alpha,\beta,t)*w(t) = w(\alpha,\beta,t)\;;$$

$$E_{\min} = \left\| w(\alpha,\beta,t) - f(\alpha,\beta,t)*w(t) \right\|_2^2\;;$$

wherein, $f(\alpha,\beta,t)$ is the direction matching operator; $w(\alpha,\beta,t)$ is the first directional seismic data; $w(t)$ is the preset desired wavelet.

Optionally, using the direction matching operator to correct the second directional seismic data, and performing inverse three-dimensional $\tau$ - $p$ transform on the corrected data, so as to obtain the final seismic trace gather data includes:

obtaining the final seismic trace gather data using the following formula:

$$\tilde{D}(x,y,t) = L_x \cdot M(p_{x\alpha}, p_{y\beta}, t) * f(\alpha,\beta,t) \cdot L_y\;;$$

wherein, $\tilde{D}(x,y,t)$ is the final seismic trace gather data; $L_x$ is a horizontal operator; $M(p_{x\alpha}, p_{y\beta}, t)$ is the second directional seismic data; $f(\alpha,\beta,t)$ is the direction matching operator; $L_y$ is the vertical operator.

A second aspect of the invention provides a data-driven direction signal deconvolution apparatus, the apparatus including:

a data acquisition module, configured to acquire pre-stack seismic trace gather data and a preset desired wavelet when seismic data is collected;
a data transformation module, configured to sequentially perform forward Fourier transform, three-dimensional $\tau$ - $p$ transform, and inverse Fourier transform on the pre-stack seismic trace gather data, so as to obtain first seismic data;
a time difference correction module, configured to perform, in each plane, time difference correction on each seismic trace in the first seismic data, so as to obtain second seismic data;
a first determining module, configured to project an azimuth angle of each seismic trace in the second seismic data onto a preset bin grid, determining one seismic trace in each bin, and forming first directional seismic data on the basis of the seismic traces of all the bins;
a second determining module, configured to project an azimuth angle of each seismic trace in the first seismic data onto the preset bin grid, determining one seismic trace in each bin, and forming second directional seismic data on the basis of the seismic traces of all the bins;
an operator determining module, configured to obtain a direction matching operator on the basis of the first directional seismic data and the preset desired wavelet; and
a data outputting module, configured to use the direction matching operator to correct the second directional seismic data, and performing inverse three-dimensional $\tau$ - $p$ transformation on corrected data, so as to obtain final seismic trace gather data.

In another aspect, the present invention also provides a readable storage medium having stored thereon instructions for causing a machine to perform the data-driven direction signal deconvolution method described above.

In the process of seismic data processing, this technical solution does not require known prior information or interference from human factors, thereby avoiding the non-convergence of low-frequency signals of seismic data in the time-space domain as the offset increases. The solution offers high computational accuracy, is easy to implement, enhances the signal-to-noise ratio of seismic data, significantly reduces memory usage and computational costs, and is suitable for processing seismic data with large volumes.

Other features and advantages of embodiments of the present invention will be described in detail in the Detailed Description section that follows.

## Brief Description of Drawings

The accompanying drawings are included to provide a further understanding of embodiments of the invention and constitute a part of this specification, and together with the detailed description below serve to explain, but not limit, embodiments of the invention. In the drawings:

FIG. 1 is a flow chart of a data-driven direction signal deconvolution method provided by the present invention;

FIG. 2 is a schematic diagram of a common receiver point trace gather of marine OBN seismic data provided by the present invention;

FIG. 3 is a schematic diagram of a preset desired wavelet of a seismic source acquisition design provided by the present invention;

FIG. 4 is a schematic diagram of the common receiver point trace gather transformed into three-dimensional $\tau$-$p$ domain seismic data provided by the present invention;

FIG. 5 is a schematic diagram of the three-dimensional $\tau$-$p$ domain seismic data after first-break correction provided by the present invention;

FIG. 6 is a schematic diagram of horizontal azimuth angle information extracted from a three-dimensional $\tau$-$p$ domain provided by the present invention;

FIG. 7 is a schematic diagram of vertical emergence angle information extracted from the three-dimensional $\tau$-$p$ domain provided by the present invention;

FIG. 8 is a schematic diagram of a display result of three-dimensional $\tau$-$p$ domain data projected onto angular bins after first-break correction provided by the present invention;

FIG. 9 is a schematic diagram of directional far-field wavelet extraction in the three-dimensional $\tau$-$p$ domain provided by the present invention;

FIG. 10 is a schematic diagram of an operator after a far-field wavelet is matched with a desired wavelet provided by the present invention;

FIG. 11 is a schematic diagram of the application of the three-dimensional $\tau$-$p$ domain matching operator provided by the present invention;

FIG. 12 is a schematic diagram of three-dimensional $\tau$-$p$ inverse transformed data after operator application provided by the present invention;

FIG. 13 is a schematic diagram of seismic wavelet spectral data after directional effect elimination provided by the present invention; and

FIG. 14 is a structural schematic diagram of a data-driven direction signal deconvolution apparatus provided by the present invention.

Description of reference numerals
10-data acquisition module; 20-data transformation module; 30-time difference correction module; 40-first determining module; 50-second determining module; 60-operator determining module; 70-data outputting module.

## Detailed Description of the Embodiments

Specific embodiments of the invention will now be described in detail with reference to the accompanying drawings. It should be understood that the specific embodiments described herein are merely illustrative and explanatory of the present invention, and are not intended to limit the present invention.

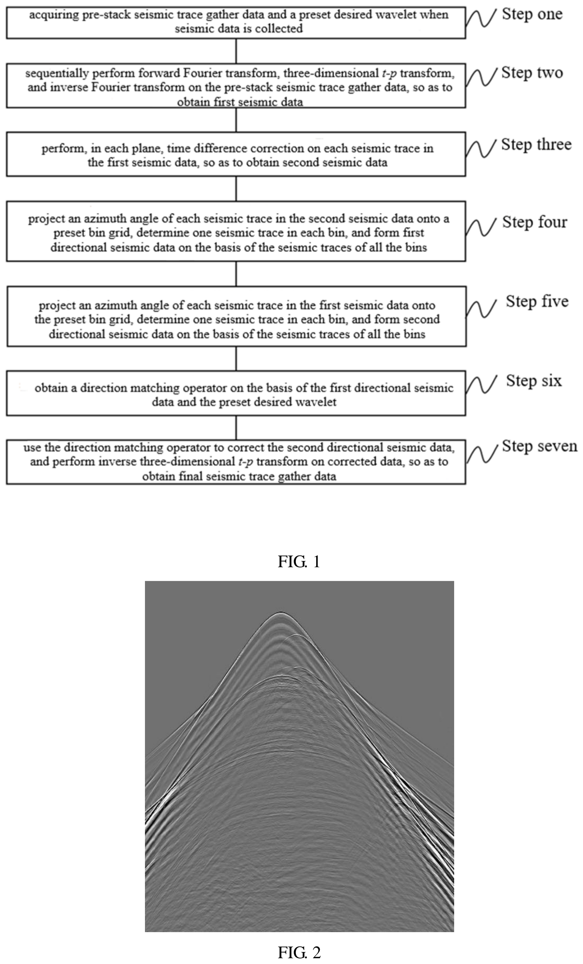

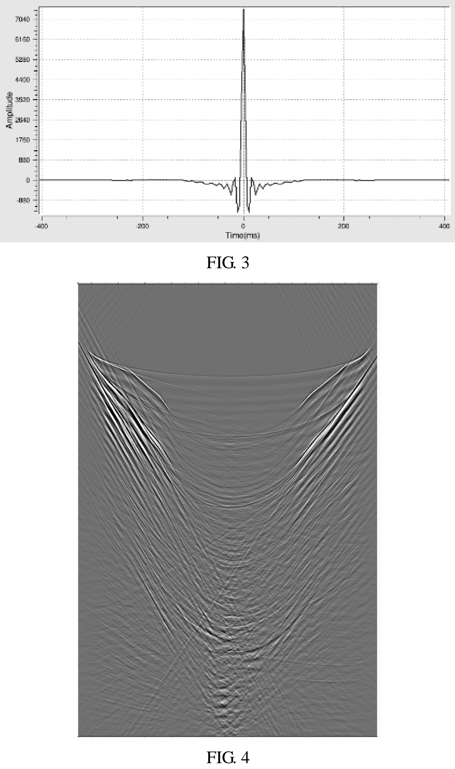

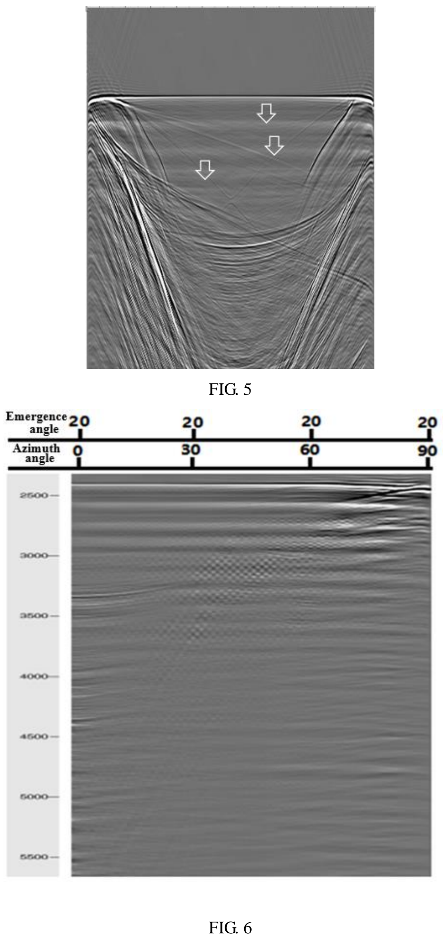

FIG. 1 is a flow chart of a data-driven direction signal deconvolution method provided by the present invention; FIG. 2 is a schematic diagram of a common receiver point trace gather of marine OBN seismic data provided by the present invention; FIG. 3 is a schematic diagram of a preset desired wavelet of a seismic source acquisition design provided by the present invention; FIG. 4 is a schematic diagram of the common receiver point trace gather transformed into three-dimensional $\tau$-$p$ domain seismic data provided by the present invention; FIG. 5 is a schematic diagram of the three-

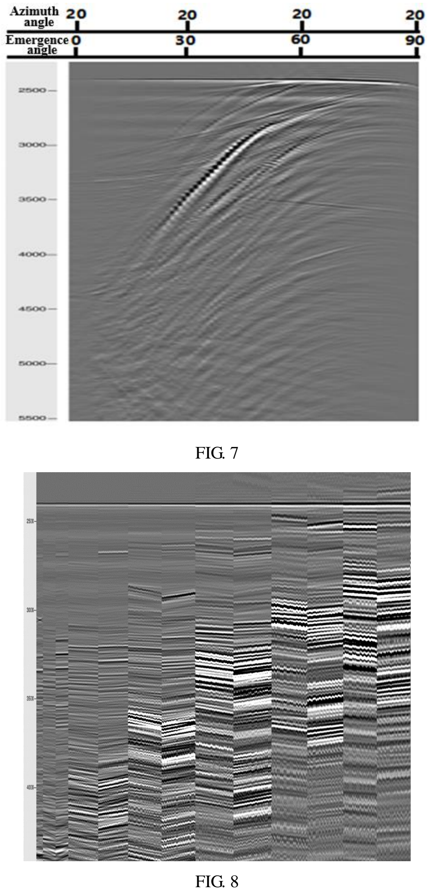

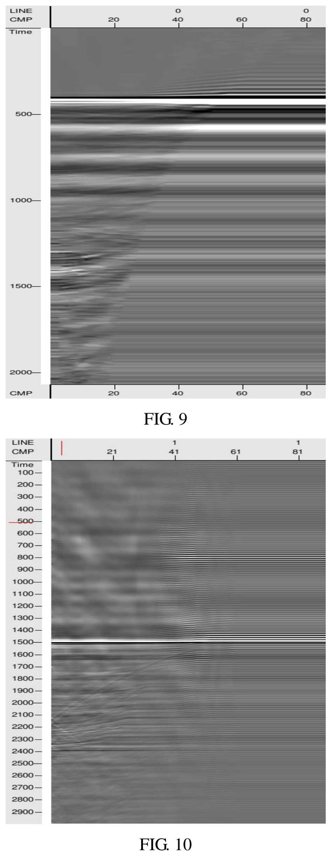

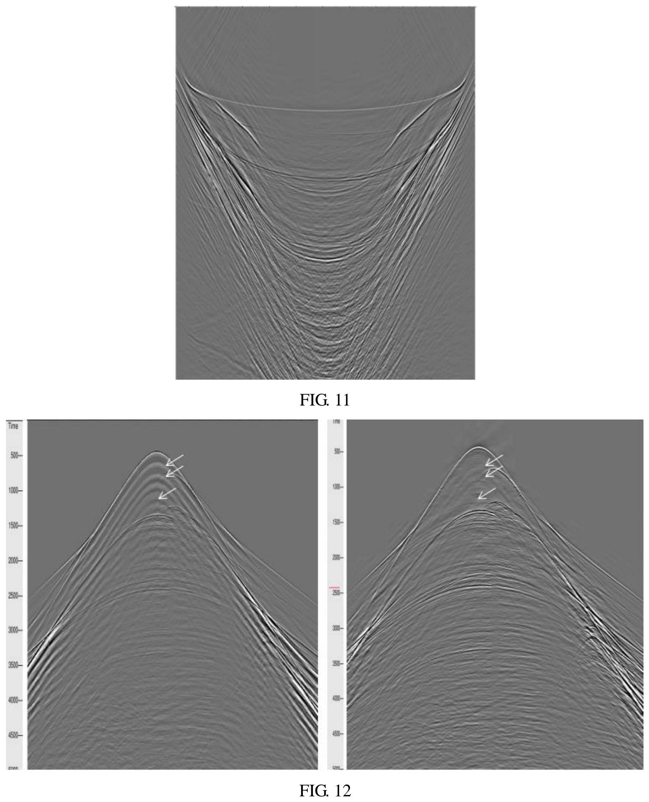

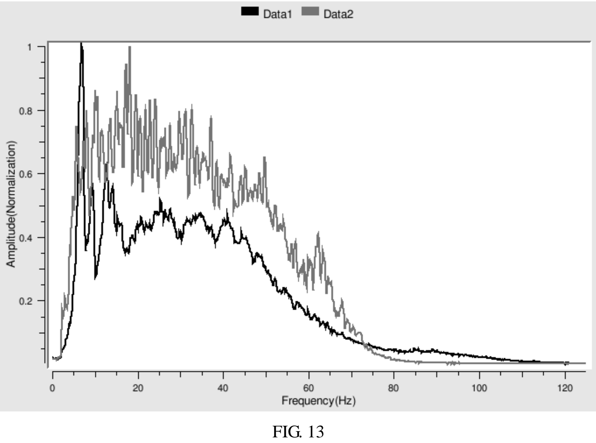

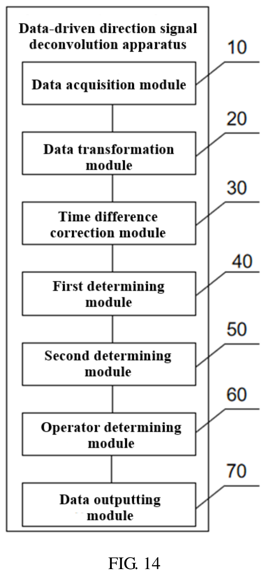

dimensional $\tau$-$p$ domain seismic data after first-break correction provided by the present invention; FIG. 6 is a schematic diagram of horizontal azimuth angle information extracted from a three-dimensional $\tau$-$p$ domain provided by the present invention; FIG. 7 is a schematic diagram of vertical emergence angle information extracted from the three-dimensional $\tau$-$p$ domain provided by the present invention; FIG. 8 is a schematic diagram of a display result of three-dimensional $\tau$-$p$ domain data projected onto angular bins after first-break correction provided by the present invention; FIG. 9 is a schematic diagram of directional far-field wavelet extraction in the three-dimensional $\tau$-$p$ domain provided by the present invention; FIG. 10 is a schematic diagram of an operator after a far-field wavelet is matched with a desired wavelet provided by the present invention; FIG. 11 is a schematic diagram of the application of the three-dimensional $\tau$-$p$ domain matching operator provided by the present invention; FIG. 12 is a schematic diagram of three-dimensional $\tau$-$p$ inverse transformed data after operator application provided by the present invention; FIG. 13 is a schematic diagram of seismic wavelet spectral data after directional effect elimination provided by the present invention; and FIG. 14 is a structural schematic diagram of a data-driven direction signal deconvolution apparatus provided by the present invention.

As shown in FIG. 1, an embodiment of the present invention provides a data-driven direction signal deconvolution method, the method including:

Step one, pre-stack seismic trace gather data and a preset desired wavelet when seismic data is collected are acquired;

specifically, in this example, the known pre-stack seismic trace gather $d(x, y, t)$ and the pre-set desired wavelet $w(t)$ designed for the seismic source acquisition are used as input data, wherein $x$ and $y$ are the horizontal and vertical coordinates, respectively, within a seismic acquisition area, and $t$ is the travel-time coordinate of seismic wave propagation. Specifically, FIG. 2 shows the input pre-stack common receiver point trace gather, and FIG. 3 shows the desired wavelet designed for acquisition;

Step two, forward Fourier transform, three-dimensional $\tau$ - $p$ transform, and inverse Fourier transform are sequentially performed on the pre-stack seismic trace gather data, so as to obtain first seismic data;

specifically, it includes calculating the distance from the receiver point to each shot point, which is referred to as the offset, and is represented by vectors *offsetx* and *offsety*, based on the shot point coordinates $(s_x, s_y)$ and the receiver point coordinates $(r_x, r_y)$ in the pre-stack seismic trace gather $d(x, y, t)$, wherein the pre-stack seismic trace gather $d(x, y, t)$ is a common receiver point trace gather (meaning that the receiver-point coordinates are the same for each trace gather while the shot-point coordinates vary).

Fast forward Fourier transform is performed on each trace in the seismic trace gather $d(x, y, t)$ in the time direction, transforming the data from the time-space domain to the frequency-space domain. The resulting seismic data, denoted as $D(x, y, \omega)$, serves as the first seismic sub-data, wherein $\omega$ is the angular frequency of the seismic data, calculated from $\omega = 2\pi f$, and $f$, as a known parameter, is the acquisition frequency of the seismic data.

Three-dimensional $\tau$ - $p$ transform is performed on the seismic data $D(x, y, \omega)$, first, the horizontal transformation operator and the vertical transformation operator of the three-dimensional $\tau$ - $p$ transform are constructed using the vector offsets *offsetx* and *offsety* of each trace in step 2), expressed as:

$$L_x = e^{-i\omega(offsetx)_m P_k} \quad (1)$$

$$L_y = e^{-i\omega(offsety)_n P_j} \quad (2)$$

wherein, in Formula (1), $L_x$ is a horizontal transformation operator; $\omega$ is an angular frequency of the seismic data; $m$ is a number of horizontal seismic traces; $p_k$ is a horizontal ray parameter (slope); k is a horizontal trace number in a $\tau$ - $p$ domain, and similarly, in Formula (2), $L_y$ is a vertical transformation operator; $\omega$ is an angular frequency of the seismic data; $n$ is a number of vertical seismic traces; $p_j$ is a vertical ray parameter; $j$ is a vertical trace number in a $\tau$ - $p$ domain; i is an imaginary unit.

From Formulas (1) and (2), the conjugate operators $L_x^H$ and $L_y^H$ of the three-dimensional $\tau$ - $p$ transform operators of each trace can be calculated by the following Formulas (3) and (4);

$$L_x^H = e^{i\omega(offsetx)_m P_k} \quad (3)$$

$$L_y^H = e^{i\omega(offsety)_n P_j} \quad (4)$$

wherein, $L_x^H$ is a conjugate operator of the horizontal transformation operator; $\omega$ is an angular frequency of the seismic data; *offsetx* is an offset in an *x* direction; *m* is a number of horizontal seismic traces; $p_k$ is a horizontal ray parameter; *k* is a horizontal trace number in a $\tau$ - *p* domain; and $L_y^H$ is a conjugate operator of the horizontal transformation operator; $\omega$ is an angular frequency of the seismic data; *offsety* is an offset in a y direction; *n* is a number of horizontal seismic traces; $p_j$ is a horizontal ray parameter; *j* is a vertical trace number in a $\tau$ - *p* domain; *i* is an imaginary unit.

Using the conjugate operators calculated above for each seismic trace, forward three-dimensional $\tau$ - *p* transform is performed on the seismic data *D(x, y, $\omega$)* to convert it from the frequency-space domain to the frequency-slowness domain, to obtain the second seismic sub-data. This process can be expressed by the following formula:

$$M(p_x, p_y, \omega) = L_x^H D(x, y, \omega) L_y^H \quad (5)$$

wherein, in Formula (5), $M(p_x, p_y, \omega)$ is the seismic data volume (second seismic sub-data) after forward three-dimensional $\tau$ - *p* transform, and fast inverse Fourier transform is performed on the seismic data $M(p_x, p_y, \omega)$ along a time direction to obtain the spectral data $M(p_x, p_y, t)$ in a three-dimensional $\tau$ - *p* domain, that is, the first seismic data; as shown in FIG. 4, it shows the display of spectral data transformed from the input pre-stack trace gather (FIG. 2) into the three-dimensional $\tau$ - *p* domain.

Step three, in each plane, time difference correction is performed on each seismic trace in the first seismic data, so as to obtain second seismic data;

specifically, the first-break event correction is performed on the seismic data $M(p_x, p_y, t)$ in the three-dimensional $\tau$ - *p* domain, and the expansion process of the bubble energy can be identified using the flattened events, wherein the formula for the correction time difference of each data trace is:

$$\Delta\tau = \tau_0 \sqrt{1 - (p_x v + p_y v)^2} - \frac{h}{v} \quad (6)$$

wherein, in Formula (6), $\Delta\tau$ is the correction time difference for each trace, $\tau_0$ is an intercept time at a zero-offset position, V is an interval velocity of a first medium, which is generally the water velocity of 1500 m/s, h is a distance from a correction plane to a water surface, wherein the correction plane is a manually defined horizontal plane, and is a constant. All traces in the seismic trace gather $M(p_x, p_y, t)$ are corrected to this plane to yield the corrected seismic data $M_{cor}(p_x, p_y, t)$, thus completing the first-break event correction process. FIG. 5 shows the result of the spectral data in the three-dimensional $\tau$ - *p* domain (FIG. 4) after first-break correction to the horizontal plane. It can be seen that reverse arcuate events are effectively flattened, allowing clear identification of the low-frequency bubble expansion process (marked by arrows in the figure).

$$M_{cor}(p_x, p_y, t) = M(p_x, p_y, t) + \Delta\tau \quad (7)$$

The formula is finally transformed into:

$$M_{cor}(p_x, p_y, t) = M(p_x, p_y, t) + \tau_0 \sqrt{1 - (p_x v + p_y v)^2} - \frac{h}{v};$$

wherein, $M_{cor}(p_x, p_y, t)$ is the second seismic data; $M(p_x, p_y, t)$ is the first seismic data; $\tau_0$ is an intercept time at a zero-offset position, V is an interval velocity of a first medium, which is generally the water velocity of 1500 m/s; $p_x$ and $p_y$ are ray parameters for each seismic trace in the first seismic data; *h* is a distance from a correction plane to a water surface;

Step four, the azimuth angle of each seismic trace in the second seismic data is projected onto a preset bin grid, one seismic trace is determined in each bin, and first directional seismic data is formed on the basis of the seismic traces of all the bins;

for the seismic data $M_{cor}(p_x, p_y, t)$ after first-break correction in the above step, i.e., the second seismic data, on the basis of the ray parameters $p_x$ and $p_y$ of each seismic trace, the horizontal azimuth angle $\alpha$ is calculated. FIG. 6 shows the azimuth angle information extracted from the seismic data after first-break correction (displayed with the same emergence angle but different azimuth angles).

$$\alpha = \arctan(\frac{p_x}{p_y}) \, (8)$$

Similarly, based on the ray parameters $p_x$ and $p_y$ of each seismic trace, as well as the interval velocity V of the first medium, which is generally the water velocity of 1500 m/s, the vertical emergence angle $\beta$ of each trace is calculated. FIG. 7 shows the emergence angle information extracted from the seismic data after first-break correction (displayed with the same azimuth angle but different emergence angles).

$$\beta = \arcsin(v\sqrt{p_x^2 + p_y^2}) \, (9)$$

The azimuth angles and emergence angles in Formulas (8) and (9) are defined within the range of [0 °~90 °]. These azimuth angles $\alpha$ and emergence angles $\beta$ are discretized into bin grids through a 1 °×1 °interval-based manner.
The azimuth angle and emergence angle of each trace in the seismic data $M_{cor}(p_x, p_y, t)$ are projected onto the bin grid defined in the above steps, and the seismic data is rearranged to obtain a new set of seismic data $M_{cor}(\alpha, \beta, t)$ with angle information. As illustrated in FIG. 8, it is the display result of the seismic data projected onto the angle bins, where the phases of the first-break information within each bin are the same.
Since the differences in the azimuth angle and emergence angle among seismic traces within each bin are minimal, and the first-break signals have been flattened, in-phase stacking can be achieved to enhance effective signals. All traces within each bin are stacked to obtain a unique seismic trace for each bin. After stacking, the seismic data from all bins form directional seismic data, which is referred to as the directional far-field wavelet w($\alpha, \beta, t$), i.e., the first directional seismic data. FIG. 9 shows the directional far-field wavelet data within each bin obtained by stacking the seismic traces in that bin.
Step five, an azimuth angle of each seismic trace in the first seismic data is projected onto the preset bin grid, one seismic trace is determined in each bin, and second directional seismic data is formed on the basis of the seismic traces of all the bins;
specifically, for the seismic data $M(p_x, p_y, t)$ that has not undergone first-break flattening, i.e., the first seismic data, the same method is applied for bin grid division to obtain new seismic data $M(p_{x\alpha}, P_{y\beta}, t)$, i.e., the second directional seismic data. The specific method is identical to the steps used for projecting the azimuth angle of each seismic trace in the second seismic data onto the preset bin grid, determining a seismic trace within each bin, and forming the first directional seismic data on the basis of the seismic traces of all bins, which will not be repeated here.
Step six, a direction matching operator is obtained on the basis of the first directional seismic data and the preset desired wavelet;
specifically, the acquired preset expected wavelet w(t) and the obtained directional far-field wavelet $w(\alpha, \beta, t)$, i.e., the first directional seismic data, are used to perform wavelet matching to obtain a matching operator. FIG. 10 shows the display result of the matching operator obtained through wavelet matching, with the specific calculation formula as follows.

$$f(\alpha, \beta, t) * w(t) = w(\alpha, \beta, t) \, (10)$$

Using the least squares criterion, the direction matching operator $f(\alpha, \beta, t)$ is obtained from Formula (10) as follows:

$$E_{\min} = \left\| w(\alpha, \beta, t) - f(\alpha, \beta, t) * w(t) \right\|_2^2 \, (11)$$

wherein, $f(\alpha, \beta, t)$ is the direction matching operator; $w(\alpha, \beta, t)$ is the first directional seismic data; w(t) is the preset desired wavelet.
Step seven, the direction matching operator is used to correct the second directional seismic data, and inverse three-dimensional $\tau - p$ transform is performed on corrected data, so as to obtain final seismic trace gather data.
The direction matching operator $f(\alpha, \beta, t)$ determined in Formula (11), as shown in FIG. 11, is applied to the seismic data $M(p_{x\alpha}, p_{y\beta}, t)$, i.e., the second directional seismic data, according to the following formula:

$$\tilde{M}(p_x, p_y, t) = M(p_{x\alpha}, p_{y\beta}, t) * f(\alpha, \beta, t) \,(12)$$

The seismic data $\tilde{M}(p_{x\alpha}, p_{y\beta}, t)$ is interacted with the horizontal operator $L_x$ and the vertical operator $L_y$ calculated above to obtain the seismic data $\tilde{D}(x,y,t)$ after the inverse three-dimensional $\tau$ - $p$ transform, which is the time-space domain seismic data after the application of direction signal deconvolution and serves as the final seismic trace gather data. The inverse transform formula is as follows;

$$\tilde{D}(x, y, t) = L_x \tilde{M}(p_x, p_y, t) L_y \,(13)$$

The final formula obtained after fusion is:

$$\tilde{D}(x, y, t) = L_x \cdot M(p_{x\alpha}, p_{y\beta}, t) * f(\alpha, \beta, t) \cdot L_y$$

wherein, $\tilde{D}(x, y, t)$ is the final seismic trace gather data; $L_x$ is a horizontal operator; $M(p_{x\alpha}, p_{y\beta}, t)$ is the second directional seismic data; $f(\alpha, \beta, t)$ is the direction matching operator; $L_y$ is the vertical operator.

As shown in FIG. 12, it presents the comparison results of seismic data before and after the application of direction signal deconvolution. At the positions marked by arrows in the figure, low-frequency interference has been effectively eliminated, and the horizontal consistency of seismic wavelets is more continuous and reliable. In FIG. 12, the left image is a schematic diagram before the application of direction signal deconvolution technology, and the right image is a schematic diagram after the application of direction signal deconvolution technology. As shown in FIG. 13, Data1 (black line) is a schematic diagram of the spectral analysis of seismic data before the application of direction signal deconvolution, and Data2 (gray line) is a schematic diagram of the spectral analysis of seismic data after the application of direction signal deconvolution. After the elimination of the directivity of the far-field wavelet, the frequency spectrum of the seismic data has been effectively expanded, and the resolution has been significantly improved.

Through the above processing steps, the data-driven direction signal deconvolution process is completed, eliminating the problem of seismic wavelet directionality introduced by the combination of excitation sources. In addition, for the processing of marine OBN wide-azimuth seismic data, this solution proposes a method to eliminate the directional effect of far-field wavelets. Due to the different spatial arrangement positions of each gun in the air-gun array, the signals excited by each gun show an obvious directional effect in the process of superposition to form far-field wavelets, which easily leads to the deterioration of the horizontal consistency of wavelets and seriously affects the quality of seismic data. However, this application can effectively eliminate the directionality of far-field wavelets, which is of great significance for the processing of OBN data. A completely data-driven method is adopted, which only requires inputting original seismic data and expected wavelets to complete the directionality elimination process of far-field wavelets. It does not need known prior information or human interference, and has high calculation accuracy and is easy to implement. The azimuth angle and emergence angle information obtained in the three-dimensional $\tau$ - $p$ domain avoids the problem that low-frequency signals in seismic data do not converge with the increase of offset in the time-space domain. Because the three-dimensional $\tau$ - $p$ domain can highlight low-frequency information more, it is easy to identify the propagation periods of low-frequency bubbles and virtual reflections at the shot point end, realize the suppression of both, and thus improve the signal-to-noise ratio of the data. The method of "first-break correction" + "small bin grid" is adopted. First-break correction achieves the purpose of in-phase enhancement of effective signals, and the small bin grid can calculate azimuth angle and emergence angle information more accurately, which provides high-precision data guarantee for the subsequent synthesis of directional far-field wavelets. It processes pre-stack trace gathers and realizes multi-core parallel computing, with high computing efficiency. At the same time, by taking advantage of the characteristic that pre-stack trace gathers are not very sensitive to underground structural changes, the matching operator calculated from one trace gather can be applied to several adjacent trace gathers, which greatly reduces memory usage and computing cost. This technology is suitable for processing large amounts of seismic data.

As shown in FIG. 14, an embodiment of the present invention also provides a data-driven direction signal deconvolution apparatus, the apparatus including:

a data acquisition module 10, configured to acquire pre-stack seismic trace gather data and a preset desired wavelet when seismic data is collected;

a data transformation module 20, configured to sequentially perform forward Fourier transform, three-dimensional $\tau$ - $p$ transform, and inverse Fourier transform on the pre-stack seismic trace gather data, so as to obtain first seismic data;

a time difference correction module 30, configured to perform, in each plane, time difference correction on each seismic trace in the first seismic data, so as to obtain second seismic data;

a first determining module 40, configured to project an azimuth angle of each seismic trace in the second seismic data onto a preset bin grid, determining one seismic trace in each bin, and forming first directional seismic data on the basis of the seismic traces of all the bins;

a second determining module 50, configured to project an azimuth angle of each seismic trace in the first seismic data onto the preset bin grid, determining one seismic trace in each bin, and forming second directional seismic data on the basis of the seismic traces of all the bins;

an operator determining module 60, configured to obtain a direction matching operator on the basis of the first directional seismic data and the preset desired wavelet; and

a data outputting module 70, configured to use the direction matching operator to correct the second directional seismic data, and performing inverse three-dimensional $\tau$ - $p$ transformation on corrected data, so as to obtain final seismic trace gather data.

Embodiments of the present invention also provide a readable storage medium having stored thereon instructions for causing a machine to perform the data-driven direction signal deconvolution method described above.

Those skilled in the art will appreciate that all or part of the steps in the method of implementing the above-described embodiments can be accomplished by instructing relevant hardware by a program stored in a storage medium and including several instructions for causing a microcontroller, chip or processor to perform all or part of the steps of the method described in the various embodiments of the present invention. The storage medium includes a USB disk, a removable hard disk, a Read-Only Memory (ROM), a Random Access Memory (RAM), a magnetic disk, an optical disk, and various media capable of storing program codes.

Those skilled in the art can clearly understand that for the convenience and conciseness of the description, only the division of the functional units and modules described above is illustrated by examples, and in practical applications, the functions described above can be allocated by different functional units and modules according to needs, that is, the internal structure of the apparatus can be divided into different functional units or modules to complete all or part of the functions described above. Each functional unit or module in the embodiment may be integrated in one processing unit, each unit may physically exist alone, or two or more units may be integrated in one unit, and the integrated unit may be implemented in the form of hardware or software functional unit. In addition, the specific names of each functional unit and module are only for convenience of mutual distinction, and are not used to limit the scope of protection of the present application.

Alternative embodiments of the present invention have been described in detail above with reference to the accompanying drawings, but the embodiments of the present invention are not limited to the specific details in the above-described embodiments, and various simple modifications can be made to the technical solutions of the embodiments of the present invention within the scope of the technical concept of the embodiments of the present invention, and these simple modifications all belong to the scope of protection of the embodiments of the present invention. In addition, it should be noted that the specific technical features described in the above-described detailed description can be combined in any suitable manner without contradiction. In order to avoid unnecessary repetition, various possible combinations of the embodiments of the present invention will not be described separately.

In addition, any combination between the various embodiments of the present invention can be made, as long as it does not depart from the idea of the embodiments of the present invention, which should also be regarded as disclosed in the embodiments of the present invention.

## Claims

1. A data-driven direction signal deconvolution method, **characterized by** comprising:

acquiring pre-stack seismic trace gather data and a preset desired wavelet when seismic data is collected;

sequentially performing forward Fourier transform, three-dimensional $\tau$ - $p$ transform, and inverse Fourier transform on the pre-stack seismic trace gather data, so as to obtain first seismic data;

performing, in each plane, time difference correction on each seismic trace in the first seismic data, so as to obtain second seismic data;

projecting an azimuth angle of each seismic trace in the second seismic data onto a preset bin grid, determining one seismic trace in each bin, and forming first directional seismic data on the basis of the seismic traces of all the bins;

projecting an azimuth angle of each seismic trace in the first seismic data onto the preset bin grid, determining one seismic trace in each bin, and forming second directional seismic data on the basis of the seismic traces of all the bins;

obtaining a direction matching operator on the basis of the first directional seismic data and the preset desired wavelet; and
using the direction matching operator to correct the second directional seismic data, and performing inverse three-dimensional $\tau$ - $p$ transform on corrected data, so as to obtain final seismic trace gather data.

**2.** The data-driven direction signal deconvolution method according to claim 1, **characterized in that** sequentially performing forward Fourier transform, three-dimensional $\tau$ - $p$ transform, and inverse Fourier transform on the pre-stack seismic trace gather data, so as to obtain the first seismic data, comprises:

calculating an offset for each seismic trace on the basis of shot point coordinates and receiver point coordinates of the pre-stack seismic trace gather data;
performing forward Fourier transform along a time direction on the pre-stack seismic trace gather data to obtain first seismic sub-data;
obtaining conjugate operators of a horizontal transformation operator and a vertical transformation operator on the basis of the offset of each seismic trace;
performing forward three-dimensional $\tau$ - $p$ transform on the seismic sub-data on the basis of the conjugate operators to obtain second seismic sub-data; and
performing inverse Fourier transform along a time direction on the second seismic sub-data to obtain the first seismic data.

**3.** The data-driven direction signal deconvolution method according to claim 2, **characterized in that** an expression of the conjugate operator of the horizontal transformation operator is:

$$L_x^H = e^{i\omega(offsetx)_m P_k} ;$$

wherein, $L_x^H$ is a conjugate operator of the horizontal transformation operator; $\omega$ is an angular frequency of the seismic data; *offsetx* is an offset in an *x* direction; *m* is a number of horizontal seismic traces; $p_k$ is a horizontal ray parameter; *k* is a horizontal trace number in a $\tau$ - $p$ domain; *i* is an imaginary unit; and
an expression of the conjugate operator of the vertical transformation operator is:

$$L_y^H = e^{i\omega(offsety)_n P_j} ;$$

wherein, $L_y^H$ is a conjugate operator of the horizontal transformation operator; $\omega$ is an angular frequency of the seismic data; *offsety* is an offset in a y direction; *n* is a number of horizontal seismic traces; $p_j$ is a horizontal ray parameter; *j* is a vertical trace number in a $\tau$ - $p$ domain; *i* is an imaginary unit.

**4.** The data-driven direction signal deconvolution method according to claim 1, **characterized in that** performing, in each plane, time difference correction on each seismic trace in the first seismic data, so as to obtain the second seismic data comprises:

performing time difference correction by using the following formula:

$$M_{cor}(p_x, p_y, t) = M(p_x, p_y, t) + \tau_0 \sqrt{1-(p_x v + p_y v)^2} - \frac{h}{v} ;$$

wherein, $M_{cor}(p_x, p_y, t)$ is the second seismic data; $M(p_x, p_y, t)$ is the first seismic data; $\tau_0$ is an intercept time at a zero-offset position, $V$ is an interval velocity of a first medium; $p_x$ and $p_y$ are ray parameters for each seismic trace in the first seismic data; h is a distance from a correction plane to a water surface.

**5.** The data-driven direction signal deconvolution method according to claim 1, **characterized in that** the azimuth angle comprises a horizontal azimuth angle and a vertical emergence angle, and the method further comprises:

calculating the horizontal azimuth angle and the vertical emergence angle using the following formulas:

$$\alpha = \arctan(\frac{p_x}{p_y}) \; ;$$

$$\beta = \arcsin(v\sqrt{p_x^2 + p_y^2}) \; ;$$

wherein, $\alpha$ is the horizontal azimuth angle; $\beta$ is the vertical emergence angle; $p_x$ and $P_y$ are ray parameters for each seismic trace; $V$ is a interval velocityinterval velocity of a first medium.

6. The data-driven direction signal deconvolution method according to claim 1, **characterized in that** obtaining the direction matching operator on the basis of the first directional seismic data and the preset desired wavelet comprises:

performing wavelet matching on the first directional seismic data and the preset desired wavelet to obtain a matching operator; and
obtaining a direction matching operator using the least squares criterion on the basis of the matching operator.

7. The data-driven direction signal deconvolution method according to claim 1, **characterized in that** obtaining the direction matching operator on the basis of the first directional seismic data and the preset desired wavelet further comprises:

obtaining a direction matching operator using the following formulas:

$$f(\alpha,\beta,t) * w(t) = w(\alpha,\beta,t) \; ;$$

$$E_{\min} = \left\| w(\alpha,\beta,t) - f(\alpha,\beta,t) * w(t) \right\|_2^2 \; ;$$

wherein, $f(\alpha,\beta,t)$ is the direction matching operator; $w(\alpha,\beta,t)$ is the first directional seismic data; w(t) is the preset desired wavelet.

8. The data-driven direction signal deconvolution method according to claim 1, **characterized in that** using the direction matching operator to correct the second directional seismic data, and performing inverse three-dimensional $\tau$ - $p$ transform on the corrected data, so as to obtain the final seismic trace gather data comprises:

obtaining the final seismic trace gather data using the following formula:

$$\widetilde{D}(x, y, t) = L_x \cdot M(p_{x\alpha}, p_{y\beta}, t) * f(\alpha,\beta,t) \cdot L_y \; ;$$

wherein, $\bar{D}(x, y, t)$ is the final seismic trace gather data; $L_x$ is a horizontal operator; $M(p_{x\alpha}, p_{y\beta}, t)$ is the second directional seismic data; $f(\alpha,\beta,t)$ is the direction matching operator; $L_y$ is the vertical operator.

9. A data-driven direction signal deconvolution apparatus, **characterized in that** the apparatus comprises:

a data acquisition module, configured to acquire pre-stack seismic trace gather data and a preset desired wavelet when seismic data is collected;
a data transformation module, configured to sequentially perform forward Fourier transform, three-dimensional $\tau$ - $p$ transform, and inverse Fourier transform on the pre-stack seismic trace gather data, so as to obtain first seismic data;
a time difference correction module, configured to perform, in each plane, time difference correction on each seismic trace in the first seismic data, so as to obtain second seismic data;
a first determining module, configured to project an azimuth angle of each seismic trace in the second seismic data onto a preset bin grid, determining one seismic trace in each bin, and forming first directional seismic data on the basis of the seismic traces of all the bins;
a second determining module, configured to project an azimuth angle of each seismic trace in the first seismic data onto the preset bin grid, determining one seismic trace in each bin, and forming second directional seismic data on the basis of the seismic traces of all the bins;

an operator determining module, configured to obtain a direction matching operator on the basis of the first directional seismic data and the preset desired wavelet; and

a data outputting module, configured to use the direction matching operator to correct the second directional seismic data, and performing inverse three-dimensional $\tau$ - $p$ transformation on corrected data, so as to obtain final seismic trace gather data.

10. A readable storage medium having stored thereon instructions for causing a machine to perform the data-driven direction signal deconvolution method according to any one of claims 1-8.

| | |
|---|---|
| acquiring pre-stack seismic trace gather data and a preset desired wavelet when seismic data is collected | Step one |
| sequentially perform forward Fourier transform, three-dimensional $t$-$p$ transform, and inverse Fourier transform on the pre-stack seismic trace gather data, so as to obtain first seismic data | Step two |
| perform, in each plane, time difference correction on each seismic trace in the first seismic data, so as to obtain second seismic data | Step three |
| project an azimuth angle of each seismic trace in the second seismic data onto a preset bin grid, determine one seismic trace in each bin, and form first directional seismic data on the basis of the seismic traces of all the bins | Step four |
| project an azimuth angle of each seismic trace in the first seismic data onto the preset bin grid, determine one seismic trace in each bin, and form second directional seismic data on the basis of the seismic traces of all the bins | Step five |
| obtain a direction matching operator on the basis of the first directional seismic data and the preset desired wavelet | Step six |
| use the direction matching operator to correct the second directional seismic data, and perform inverse three-dimensional $t$-$p$ transform on corrected data, so as to obtain final seismic trace gather data | Step seven |

FIG. 1

FIG. 2

FIG. 3

FIG. 4

FIG. 5

FIG. 6

FIG. 7

FIG. 8

FIG. 9

FIG. 10

FIG. 11

FIG. 12

FIG. 13

**Data-driven direction signal deconvolution apparatus**

| Data acquisition module | 10 |
| Data transformation module | 20 |
| Time difference correction module | 30 |
| First determining module | 40 |
| Second determining module | 50 |
| Operator determining module | 60 |
| Data outputting module | 70 |

FIG. 14

## INTERNATIONAL SEARCH REPORT

| International application No. |
| --- |
| **PCT/CN2023/137944** |

**A. CLASSIFICATION OF SUBJECT MATTER**

G01V1/36(2006.01)i

According to International Patent Classification (IPC) or to both national classification and IPC

**B. FIELDS SEARCHED**

Minimum documentation searched (classification system followed by classification symbols)

IPC: G01V

Documentation searched other than minimum documentation to the extent that such documents are included in the fields searched

Electronic data base consulted during the international search (name of data base and, where practicable, search terms used)

WPABS; CNTXT; CNKI; VEN; USTXT; WOTXT; EPTXT; IEEE: 地震道, 反褶积, 方位角, 方向性, 面元网格, 匹配, 算子, 远场子波, azimuth, earthdin, earthquake, earthshock, fourier, deconvolution, record

**C. DOCUMENTS CONSIDERED TO BE RELEVANT**

| Category* | Citation of document, with indication, where appropriate, of the relevant passages | Relevant to claim No. |
| --- | --- | --- |
| A | CN 108957545 A (CHINA UNIVERSITY OF PETROLEUM, BEIJING) 07 December 2018 (2018-12-07) description, paragraphs [0032]-[0041], and figures 1-8 | 1-10 |
| A | CN 102879799 A (CHINA NATIONAL PETROLEUM CORP. et al.) 16 January 2013 (2013-01-16) entire document | 1-10 |
| A | CN 114545495 A (BEIJING MULTI-COMPONENT SEISMIC TECHNOLOGY RESEARCH INSTITUTE) 27 May 2022 (2022-05-27) entire document | 1-10 |
| A | US 2019250291 A1 (CHINA UNIVERSITY OF GEOSCIENCES, BEIJING) 15 August 2019 (2019-08-15) entire document | 1-10 |

☐ Further documents are listed in the continuation of Box C.　　☑ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **06 May 2024** | **22 May 2024** |

| Name and mailing address of the ISA/CN | Authorized officer |
| --- | --- |
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
**Information on patent family members**

International application No.

**PCT/CN2023/137944**

| Patent document cited in search report | | | Publication date (day/month/year) | Patent family member(s) | | | Publication date (day/month/year) |
|---|---|---|---|---|---|---|---|
| CN | 108957545 | A | 07 December 2018 | None | | | |
| CN | 102879799 | A | 16 January 2013 | CN | 102879799 | B | 13 May 2015 |
| CN | 114545495 | A | 27 May 2022 | None | | | |
| US | 2019250291 | A1 | 15 August 2019 | None | | | |

Form PCT/ISA/210 (patent family annex) (July 2022)